# EUROPÄISCHE PATENTSCHRIFT

(11) **EP 0 980 318 B1**
(45) Veröffentlichungstag und Bekanntmachung des Hinweises auf die Patenterteilung: **05.12.2001**
(21) Anmeldenummer: 98924196.3
(22) Anmeldetag: 24.04.1998
(51) Int. Cl.: B60H 1/00

(54) **VERFAHREN ZUR ZUVERLÄSSIGEN INNENRAUMTEMPERATURBESTIMMUNG EINES KRAFTFAHRZEUGES**
METHOD FOR DETERMINING THE TEMPERATURE INSIDE A MOTOR VEHICLE IN A RELIABLE MANNER
PROCEDE POUR DETERMINER DE MANIERE FIABLE LA TEMPERATURE INTERIEURE D'UNE AUTOMOBILE

(30) Priorität: 03.05.1997 DE 19718780
(43) Veröffentlichungstag der Anmeldung: 23.02.2000
(73) Patentinhaber: Mannesmann VDO Aktiengesellschaft, 60388 Frankfurt am Main (DE)
(72) Erfinder: STROBEL, Henry, D-65843 Sulzbach (DE)
(74) Vertreter: Rassler, Andrea, Dipl.-Phys.
(86) Internationale Anmeldenummer: EP9802435
(87) Internationale Veröffentlichungsnummer: WO9850244

(56) Entgegenhaltungen:
- EP-A- 0 659 599
- US-A- 5 311 746
- US-A- 5 564 625

## Beschreibung

Die Erfindung betrifft ein Verfahren zur zuverlässigen Innenraumtemperaturbestimmung eines Kraftfahrzeuges, insbesondere für die Steuerung einer Klimaanlage in dem Kraftfahrzeug, bei welchem ein die Innenraumtemperatur des Kraftfahrzeuges detektierender Sensor durch einen Lüftermotor belüftet wird, wobei der Lüftermotor gleichzeitig mit einer anderen ein Geräusch erzeugenden Einrichtung eines Kraftfahrzeuges betrieben wird.

Bei Bediengeräten für die Steuerung von Klimaanlagen in Kraftfahrzeugen werden zur Messung der Innenraumtemperatur des Kraftfahrzeuges NTC-bzw. PTC-Elemente eingesetzt. Es ist üblich, mittels einem kleinen, leisen laufenden Motor, an dem ein Schaufelrad befestigt ist, die Innenluft anzusaugen und damit den Innenraumtemperaturfühler zu belüften. Dieser Lüftermotor läuft, sobald z.B. der Fahrer die Fahrzeugtür öffnet (US 5,311,746) oder ein Öffnungssignal der Zentralverriegelung, das Innenlicht oder die Standheizung aktiviert wird und dieses vom Klimasteuergerät erkannt wird. Das heißt, der Lüftermotor läuft bereits vor Einschalten der Zündung bzw. läuft nach Ausschalten der Zündung noch eine Zeitlang weiter, um den Innenraumtemperaturfühler zu kühlen. Sobald aber der Antriebsmotor des Kraftfahrzeuges ausgeschaltet ist, wird die Geräuschbelästigung durch den Lüftermotor vom Fahrzeugnutzer als störend empfunden. Der Lüftermotor kann nach der US 5,311,746 auch mit dem Aktivieren der Zündung eingeschaltet werden.

Der Erfindung liegt somit die Aufgabe zugrunde, ein Verfahren zur Innenraumtemperaturbestimmung anzugeben, bei welchem die Geräuschbelästigung durch den Lüftermotor eliminiert wird.

Erfindungsgemäß wird die Aufgabe durch die Merkmale des Patentanspruchs 1 gelöst. Da der Lüftermotor erst mit einer anderen, ein Geräusch erzeugenden Einrichtung des Kraftfahrzeuges, also erst mit Aktivierung der Zündung anläuft, wird die durch das spätere Einschalten des Lüftermotors bewirkte Aufheizung des Innenraumtemperaturfühlers zum Zeitpunkt des Kraftfahrzeugstartes kompensiert. Die Klimasteuerung funktioniert zuverlässig, da mit dem richtigen Ausgangswert begonnen wird. Die ein Geräusch erzeugende Einrichtung kann entweder der Verbrennungsmotor des Kraftfahrzeuges oder der Ventilator der Klimaanlage des Kraftfahrzeuges sein.

In einer Weiterbildung wird die Innenraumfühleraufheizung dadurch bestimmt, daß die Zeit nach Abschalten und Wiedereinschalten der Zündung des Kraftfahrzeuges bestimmt wird und diese Zeit mit einem Zeitschwellwert verglichen wird. Bei Überschreitung des Zeitschwellwertes wird die Temperatur des Verbrennungsmotors gemessen und bei Überschreitung eines Verbrennungsmotor-Temperaturschwellwertes der Innenraumtemperaturfühler sofort durch den Lüftermotor gelüftet. In einer Anlaufphase wird die ein Geräusch erzeugende Einrichtung gegenüber dem Lüftermotor mit einer ersten Dämpfungszeit verzögert gesteuert. Die Temperatur des Verbrennungsmotors wird über die Kühlwassertemperatur bestimmt.

Somit wird der durch Aufheizung des Innenraumtemperaturfühlers hervorgerufene falsche Anfangswert der Klimasteuerung korrigiert. Die Klimasteuerung arbeitet bei allen Startsituationen zuverlässig mit der richtigen Klappenstellung und der richtigen Gebläseautomatik.

In einer Ausgestaltung wird bei Unterschreitung des Zeitschwellwertes die Umgebungstemperatur des Kraftfahrzeuges gemessen. Die Innenraumtemperatur wird mit der Umgebungstemperatur verglichen und bei Überschreitung der Umgebungstemperatur, die zum Zeitpunkt des Abschaltens des Verbrennungsmotors gemessene Innenraumtemperatur für alle steigende Innenraumtemperaturen zur Regelung der Klimaanlage herangezogen.

Es wird somit sicher verhindert, daß die Klimaanlage im Kühlmodus startet, obwohl eigentlich der Heizmodus notwendig wäre.

Die Erfindung läßt zahlreiche Ausführungsmöglichkeiten zu. Eines davon soll anhand der in der Zeichnung dargestellten Figuren näher erläutert werden.

Es zeigt:
- Figur 1:: Klimagerät eines Kraftfahrzeuges,
- Figur 2:: Schnitt durch Klimasteuergerät.

Gleiche Merkmale sind mit gleichen Bezugszeichen gekennzeichnet.

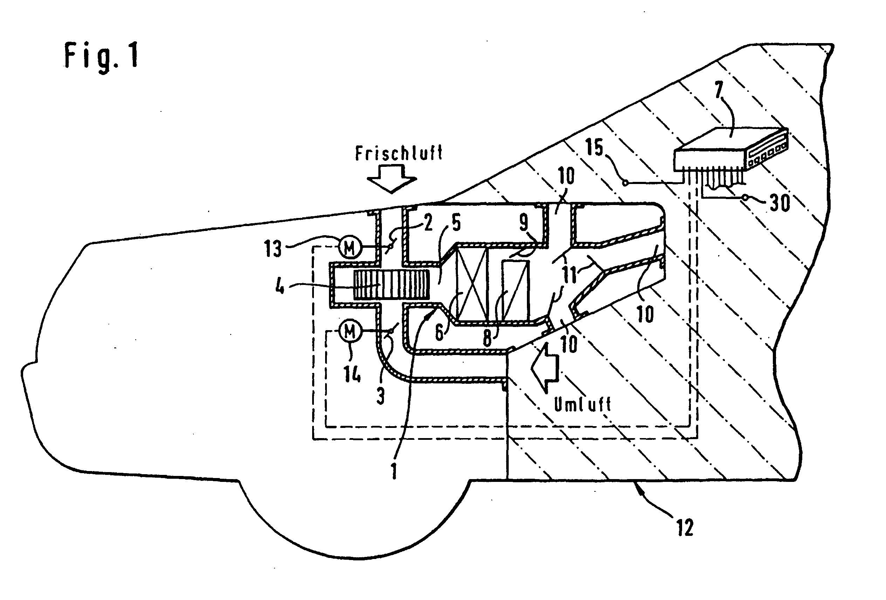

Gemäß Figur 1 ist das Klimagerät 1 in seiner konkreten Anordnung im Kraftfahrzeug 12 dargestellt.

Über die Frischluftklappe 2, deren Stellung von einem Stellmotor 13 in Abhängigkeit von elektrischen Signalen gesteuert wird, die vom Klimasteuergerät 7 ausgegeben werden, wird Frischluft aus der Umgebung des Fahrzeuges in das Kraftfahrzeug 12 angesaugt.

Die Umluft aus dem Fahrgastraum des Kraftfahrzeuges wird über die Umluftklappe 3 vom Klimagerät 1 angesaugt. Auch die Stellung der Umluftklappe 3 wird in Abhängigkeit von elektrischen Signalen des Klimasteuergerätes 7 von einem Stellmotor 14 gesteuert. Über den Ventilator 4 werden Um- und Frischluft in das Klimagerät 1 gefördert, wodurch hinter dem Ventilator 4 Mischluft 5 entsteht.

Diese Mischluft 5 wird dem Verdampfer 6 zugeführt.

Im Kühlbetrieb wird die Mischluft 5 über Ausströmer 10 an den Fahrgastraum abgegeben. Diese Ausströmer 10 sind in Kanälen angeordnet, die in Richtung Windschutzscheibe, in Richtung Fahrer bzw. Beifahrer und in Richtung des Fußbereiches des Fahrers bzw. Beifahrers weisen. Mittels der in den einzelnen Kanälen angeordneten Luftverteilerklappen 11, kann der Lufteintritt vom Fahrer bzw. Beifahrer reguliert werden.

An den Verdampfer 6 schließt sich ein Wärmetauscher 8 an. Die vom Verdampfer 6 abgegebene Luftmenge wird mit Hilfe einer Temperaturklappe 9 am Wärmetauscher 8 vorbeigeführt und dabei erwärmt. Im Heizbetrieb strömt dann die entsprechend temperierte Mischluft in den Fahrgastraum.

Das Klimasteuergerät 7 ist üblicherweise im oder in der Nähe des Armaturenbrettes das Fahrzeuges angeordnet, so daß es mühelos vom Fahrer und Beifahrer während der Fahrt bedient werden kann.

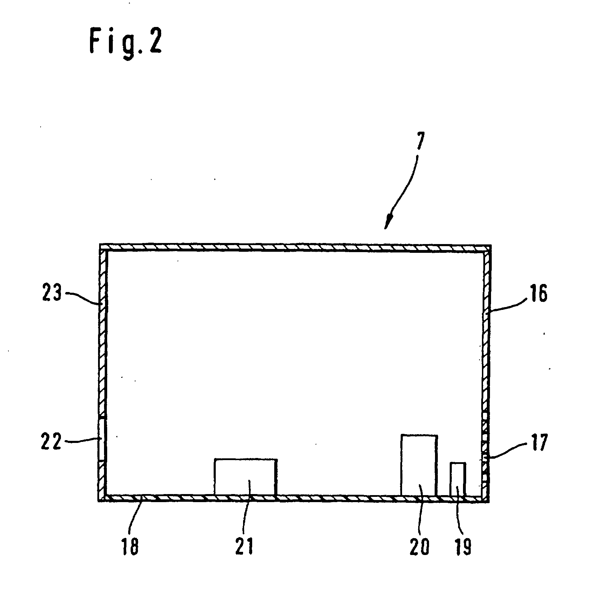

Der schematische Aufbau des Klimasteuergerätes 7 ist in Figur 2 dargestellt.

In seiner Frontplatte 16 weist das Klimasteuergerät 7 nicht weiter dargestellte Bedienelemente zur Einstellung der Fahrzeugklimaanlage auf. Die Frontplatte 16 enthält Schlitze 17, durch welche Raumluft in das Klimasteuergerät 7 angesaugt wird. Im Klimasteuergerät 7 sind auf einer Leiterplatte 18 direkt hinter den Ansaugschlitzen 17 ein Innenraumtemperaturfühler 19 und in dessen Nähe ein Lüftermotor 20 angeordnet. An dem Lüftermotor 20 ist üblicherweise ein Schaufelrad befestigt, durch welches die Innenluft angesaugt wird und somit der Innenraumtemperaturfühler 19 belüftet wird. Der Innenraumtemperaturfühler 19 und der Lüftermotor 20 können aber auch außerhalb des Klimasteuergerätes 7 in einer Meßstelle innerhalb des Fahrgastraumes des Kraftfahrzeuges angeordnet sein, wobei das Ausgangssignal des Innenraumtemperaturfühlers 19 an das Klimasteuergerät 7 weitergeleitet und dort von einem Mikroprozessor 21 weiterverarbeitet wird, der ebenfalls auf der Leiterplatte 18 angeordnet ist. Es ist aber auch denkbar, daß beide Meßstellen miteinander kombiniert sind.

Die vom Lüftermotor 20 angesaugte Luft wird durch die Luftaustrittsöffnung 22 der Rückwand 23 des Klimasteuergerätes 7 an die Umgebung abgegeben.

Das Klimasteuergerät 7 ist, wie aus Figur 1 zu entnehmen ist, außer dem mit den Anschlüssen Klemme 30 (Batterie) und Klemme 15 (geschaltetes Plus in der Batterie - Ausgang Zündschalter) des Kraftfahrzeuges sowie mit einem Umgebungstemperatursensor, der im Kühlergrill angeordnet ist, und einen Kühlwassertemperatursensor verbunden. Es ist auch möglich, daß das Klimasteuergerät 7 die Informationen über Umgebungstemperatur und Kühlwassertemperatur über einen Datenbus erhält.

Das erfindungsgemäße Verfahren soll nun anhand verschiedener Startsituationen des Kraftfahrzeuges erläutert werden.

Grundsätzlich soll der Lüftermotor nur dann laufen, wenn der Ventilator 4 ebenfalls läuft, da dann die Geräusche des Lüftermotors 20 nicht weiter auffallen.

Es gibt verschiedene Startsituationen des Kraftfahrzeuges, die bei der Regelung berücksichtigt werden sollen. Zunächst wird festgestellt, ob bei dem Kraftfahrzeug ein sogenannter Warm- oder Kaltstart erfolgt. Dies wird über eine Zeitmessung analysiert. Es wird die Zeit gemessen, welche zwischen dem Aus- und wieder Einschalten der Klemme 30 vergeht. Beträgt dieser Zeitraum weniger als 16 Minuten, handelt es sich um einen Warmstart. Ist diese Zeit größer als 16 Minuten, liegt die Situation eines Kaltstartes vor. Da das Klimasteuergerät 7 einen Mikroprozessor 21 enthält, kann die Zeitmessung einfach mittels des Taktgebers realisiert werden, welcher im Mikroprozessor an sich vorhanden ist.

Eine andere Möglichkeit festzustellen, ob es sich um einen Kalt- oder Warmstart des Kraftfahrzeuges handelt, besteht darin, zu überprüfen, ob die Verbraucher des Klimasteuergerätes 7 im Kraftfahrzeug noch aktiv sind. Da eine Verbraucherabschaltung nach der in Kraftfahrzeugen üblicherweise verwendeten Norm erst nach 16 Minuten erfolgt, muß nur festgestellt werden, ob die Verbraucher noch arbeiten oder nicht.

Wurde ein Kaltstart detektiert, wird überprüft, ob das Kraftfahrzeug nur kurzzeitig abgestellt wurde oder ob es beispielsweise 10 Stunden außer Betrieb war. Dies erfolgt über die Messung der Kühlwassertemperatur. Übersteigt die Kühlwassertemperatur einen Kühlwassertemperaturschwellwert, wird sobald der Ventilator 4 als geräuscherzeugende Einrichtung eingeschaltet ist, der Innenraumtemperaturfühler 19 sofort belüftet. Das heißt der Lüftermotor 20 läuft sofort an. Die automatische Steuerung des Ventilators 4 wird erst nach Ablauf einer ersten Zeitdauer von etwa 30 bis 60 Sekunden durch das Klimasteuergerät 7 in Betrieb gesetzt. Somit wird sicher verhindert, daß der aufgeheizte Innenraumtemperaturfühler 19 einen falschen Ausgangswert für die Klimaregelung liefert, was eine falsche Klappenposition und eine falsche Gebläseautomatik zur Folge hätte.

Wurde mit Hilfe der oben beschriebenen Verfahrensschritte festgestellt, daß es sich bei der Startsituation des Kraftfahrzeuges um einen Warmstart handelt, wird der Ausgangspunkt der Klimaregelung mit Hilfe der Außentemperatur eingestellt.

Unterschreitet die tatsächlich gemessene Außentemperatur in der Umgebung des Kraftfahrzeuges einen Temperaturschwellwert, der beispielsweise bei 5° C liegt, wird bei eingeschaltetem Ventilator 4, der Innenraumtemperaturfühler 19 sofort belüftet. Ist Klemme 15 aber ausgeschaltet, wird die durch den Innenraumtemperaturfühler 19 gemessene Innenraumtemperatur mit der Außentemperatur verglichen. Ist die Innenraumtemperatur des Kraftfahrzeuges höher als die Außentemperatur, wird für die weitere Klimaregelung die zu diesem Zeitpunkt detektierte Innenraumtemperatur für steigende Temperaturen eingefroren, d. h. die zu diesem Zeitpunkt gemessene Innenraumtemperatur wird für die Klimaregelung verwendet. Weiterhin ist vorgesehen, daß die automatische Steuerung des Ventilators 4 erst nach einer zweiten Zeitdauer nach etwa 10 bis 15 Sekunden nach dem Lüftermotor 20 angehen darf.

Erfolgt ein Warmstart bei Außentemperaturen, die höher als der Außentemperaturschwellwert von 5° C sind, wird bei steigender Innenraumtemperatur, die größer ist als die Außentemperatur, wie oben erläutert, die zum Zeitpunkt des Abstellens des Verbrennungsmotors gemessene Innenraumtemperatur für die Klimaregelung verwendet, solange Klemme 15 ausgeschaltet ist. Dabei wird ein allmählicher Ventilatoranlauf realisiert.

Alternativ dazu kann aber auch der aktuell bestimmte Innenraumtemperaturwert bei gleichzeitigem Anlauf von Lüftermotor 20 und Ventilator 14 verwendet werden. Somit wird schnell die richtige Innenraumtemperatur gemessen und auch die Klappen und die Gebläseautomatik auf den richtigen Wert eingeregelt.

### Bezugszeichenliste

- 1.: Klimagerät
- 2.: Frischluftklappe
- 3.: Umluftklappe
- 4.: Ventilator
- 5.: Mischluft
- 6.: Kältewärmetauscher
- 7.: Klimasteuergerät
- 8.: Heizwärmetauscher
- 9.: Temperaturklappe
- 10.: Ausströmer
- 11.: Luftverteilerklappen
- 12.: Kraftfahrzeug
- 13.: Stellmotor
- 14.: Stellmotor
- 15.: Klemme: geschaltetes Plus an Batterie
- 16.: Frontplatte
- 17.: Ansaugschlitz
- 18.: Leiterplatte
- 19.: Innenraumtemperaturfühler
- 20.: Lüftermotor
- 21.: µR
- 22.: Luftaustrittsöffnung
- 23.: Rückwand
- 30.: Batterieklemme

## Patentansprüche

1. Verfahren zur zuverlässigen Innenraumtemperaturbestimmung für ein Kräftfahrzeug, insbesondere für die Steuerung einer Klimaanlage in dem Kraftfahrzeug (12), bei welchem ein die Innentemperatur des Kraftfahrzeuges (12) detektierender Sensor durch einen Lüftermotor belüftet wird, wobei der Lüftermotor (20) gleichzeitig mit einer anderen ein Geräusch erzeugenden Einrichtung des Kraftfahrzeuges (12) betrieben wird, **dadurch gekennzeichnet, daß** die Innenraumfühleraufheizung zum Zeitpunkt des Kraftfahrzeugstartes kompensiert wird.

2. Verfahren nach Anspruch 1, **dadurch gekennzeichnet, daß** die ein weiteres Geräusch erzeugende Einrichtung der Verbrennungsmotor des Kraftfahrzeuges ist.

3. Verfahren nach Anspruch 1, **dadurch gekennzeichnet, daß** die ein Geräusch erzeugende Einrichtung der Ventilator (4) der Kilmaanlage ist.

4. Verfahren nach einem der vorhergehenden Ansprüche, **dadurch gekennzeichnet, daß** die Innenraumfühleraufheizung bestimmt wird. indem die Zeit nach Abschalten und Wiedereinschalten der Zündung des Kraftfahrzeuges bestimmt wird und mit einem Zeitschweilwert verglichen wird.

5. Verfahren nach Anspruch 4, **dadurch gekennzeichnet, daß** bei Überschreitung des Zeitschwellwertes die Temperatur des Verbrennungsmotors gemessen wird und bei Überschreitung eines Verbrennungsmotor-Temperaturschwellwertes der Innenraumtemperaturfühler sofort durch den Lüftermotor belüftet wird.

6. Verfahren nach Anspruch 5, **dadurch gekennzeichnet, daß** der Ventilator (4) gegenüber dem Lüftermotor (20) mit einer ersten Dämpfungszeit eingeschaltet wird.

7. Verfahren nach Anspruch 5 oder 6, **dadurch gekennzeichnet, daß** die Temperatur des Verbrennungsmotors über die Kühlwassertemperatur bestimmt wird.

8. Verfahren nach Anspruch 4, **dadurch gekennzeichnet, daß** bei Unterschreitung des Zeitschwellwertes die Umgebungstemperatur des Kraftfahrzeuges gemessen wird.

9. Verfahren nach Anspruch 8, **dadurch gekennzeichnet, daß** die Innenraumtemperatur mit der Umgebungstemperatur verglichen wird und bei Überschreitung der Umgebungstemperatur die zu diesem Zeitpunkt gemessene Innenraumtemperatur für steigende Innenraumtemperaturen zur Regelung herangezogen wird.

## Claims

1. Method for the reliable determination of the interior temperature of a motor vehicle, in particular for controlling an air-conditioning system in the motor vehicle (12), in which a sensor detecting the interior temperature of the motor vehicle (12) is ventilated by a fan motor, the fan motor (20) being operated simultaneously with another noise-generating device of the motor vehicle (12), **characterized in that** the heating-up of the interior sensor is compensated at the time of the starting of the motor vehicle.

2. Method according to Claim 1, **characterized in that** the device generating further noise is the internal combustion engine of the motor vehicle.

3. Method according to Claim 1, **characterized in that** the noise-generating device is the fan (4) of the air-conditioning system.

4. Method according to one of the preceding claims, **characterized in that** the heating-up of the interior sensor is determined **in that** the time after the ignition of the motor vehicle is switched off and switched on again is determined and is compared with a time threshold value.

5. Method according to Claim 4, **characterized in that** when the time threshold value is exceeded, the temperature of the internal combustion engine is measured and, when a temperature threshold value of the internal combustion engine is exceeded, the interior-temperature sensor is ventilated immediately by means of the fan motor.

6. Method according to Claim 5, **characterized in that** the fan (4) is switched on with a first damping time in relation to the fan motor (20).

7. Method according to Claim 5 or 6, **characterized in that** the temperature of the internal combustion engine is determined via the cooling-water temperature.

8. Method according to Claim 4, **characterized in that**, when the time threshold value is fallen short of, the ambient temperature of the motor vehicle is measured.

9. Method according to Claim 8, **characterized in that** the interior temperature is compared with the ambient temperature and, when the ambient temperature is exceeded, the interior temperature measured at this time is used for regulation in the case of rising interior temperatures.

## Revendications

1. Procédé pour la détermination fiable de la température de l'espace intérieur d'un véhicule automobile, en particulier pour la régulation d'une installation de climatisation dans le véhicule automobile (12), dans lequel un capteur détectant la température intérieure du véhicule automobile (12) est ventilé par un moteur de ventilation, le moteur de ventilation (20) étant entraîné en même temps qu'un autre dispositif du véhicule automobile (12) créant un bruit, **caractérisé en ce que** le chauffage de la sonde de l'espace intérieur est compensé au moment du démarrage du véhicule automobile.

2. Procédé selon la revendication 1, **caractérisé en ce que** le dispositif créant un autre bruit est le moteur à combustion interne du véhicule automobile.

3. Procédé selon la revendication 1, **caractérisé en ce que** le dispositif créant un bruit est le ventilateur (4) de l'installation de climatisation.

4. Procédé selon l'une des revendications précédentes, **caractérisé en ce que** le chauffage de la sonde de l'espace intérieur est déterminé en déterminant la durée qui s'écoule après débranchement et rebranchement de l'allumage du véhicule automobile, et en la comparant à une valeur de seuil de temps.

5. Procédé selon la revendication 4, **caractérisé en ce que**, lorsque la valeur de seuil de temps est dépassée, la température du moteur à combustion interne est mesurée, et lorsqu'une valeur de seuil de température du moteur à combustion interne est dépassée, la sonde de température de l'espace intérieur est immédiatement ventilée par le moteur de ventilation.

6. Procédé selon la revendication 5, **caractérisé en ce que** le ventilateur (4) est branché avec une première durée d'amortissement par rapport au moteur de ventilation (20).

7. Procédé selon la revendication 5 ou 6, **caractérisé en ce que** la température du moteur à combustion interne est déterminée par l'intermédiaire de la température de l'eau de refroidissement.

8. Procédé selon la revendication 4, **caractérisé en ce que** lorsque la valeur de seuil de temps n'est pas atteinte, la température de l'environnement du véhicule automobile est mesurée.

9. Procédé selon la revendication 8, **caractérisé en ce que** la température de l'espace intérieur est comparée à la température ambiante, et lorsque la température de l'environnement est dépassée, la température de l'espace intérieur mesurée à cet instant est prise comme référence de régulation pour des températures croissantes de l'espace intérieur.
